# EUROPÄISCHE PATENTANMELDUNG

(11) **EP 1 821 045 A1**
(43) Veröffentlichungstag der Anmeldung: **22.08.2007**
(21) Anmeldenummer: 06024972.9
(22) Anmeldetag: 02.12.2006
(51) Int. Cl.: F24H 1/20, F28D 20/00

(54) **Heizanlage mit einem Pufferspeicher und Wärmepumpenbetrieb**

(30) Priorität: 15.02.2006 DE 202006002535 U
(71) Anmelder: Carl Capito Heiztechnik GmbH, 57290 Neunkirchen (DE)
(72) Erfinder: von Gradowski, Bernhard, 57520 Friedewald (DE)
(74) Vertreter: Grosse, Wolf-Dietrich Rüdiger

(57) **Zusammenfassung**

Bei einer Heizanlage mit einem Pufferspeicher (1) und Wärmepumpenbetrieb, der als Schichtspeicher ausgebildet ist und mehrere Kreisläufe vereint, wie einen Kreislauf für Wasch- und Duschwasser (4) und eine Versorgung einer Heizung (3), sowie Anschlüsse zur Aufnahme von an die Verbraucherleitungen angeschlossenen Wärmetauschern (11; 12 a, 12 b) aufweist, wobei im unteren Bereich des Pufferspeichers ein den Innenraum des Pufferspeichers unterteilender Schichtungsstabilisator (5) angeordnet und über diesen der untere Pufferspeicherraum mit dem oberen, größeren Pufferspeicherraum strömungstechnisch verbunden ist, ist die Wärmepumpe (2) mit ihrer Rücklaufleitung (16) an eine erste kalte Zone (I) oberhalb des Schichtungsstabilisators (5) im Bereich eines tiefliegenden Punktes des oberen Pufferspeicherraums (10) und an eine zweite kalte Zone (II) unterhalb des Schichtungsstabilisators (5) angeschlossen, wobei der Wärmepumpe (2) im Rücklauf sowohl im Brauchwasservorrangbetrieb als auch im Heizungsbetrieb ohne Hilfsregelung stets aus der ersten oder zweiten kalten Zone (I; II) Wasser zuströmt.

## Beschreibung

Die Erfindung betrifft eine Heizanlage mit einem Pufferspeicher und Wärmepumpenbetrieb, der als Schichtspeicher ausgebildet ist und mehrere Kreisläufe vereint, wie einen Kreislauf für Wasch- und Duschwasser und eine Versorgung einer Heizung, sowie Anschlüsse zur Aufnahme von an die Verbraucherleitungen angeschlossenen Wärmetauschern aufweist, wobei im unteren Bereich des Pufferspeichers ein den Innenraum des Pufferspeichers unterteilender Schichtungsstabilisator angeordnet und über diesen der untere Pufferspeicherraum mit dem oberen, größeren Pufferspeicherraum strömungstechnisch verbunden ist.

Eine Heizungsanlage mit einem dort als solarer Schichtspeicher betriebenen Pufferspeicher ist durch die EP 1 411 312 A1 bekannt geworden. Der Schichtungsstabilisator, bestehend insgesamt aus einem gut wärmeisolierenden Material, insbesondere Polypropylen, umfasst eine in ihrem Außendurchmesser dem Innendurchmesser des Kessels angepasste Ronde sowie in einer Ebene einander gegenüberliegend ein Steigrohr und ein Fallrohr. Der Schichtungsstabilisator dient zur Optimierung der Nutzung der eingebrachten Energie und schnellen Bereitstellung warmen bzw. heißen Brauchwassers, insbesondere im höchsten Punkt des Pufferspeichers. Die Ronde des Schichtungsstabilisators befindet sich im unteren Bereich des Pufferspeichers und unterteilt diesen in einen kleineren, unteren Pufferspeicherraum und einen demgegenüber sehr viel größeren, oberen Pufferspeicherraum.

Bei Zuführung von Energie, z. B. Solarenergie, heizt sich das relativ geringe Füllvolumen des unteren Pufferraums sehr schnell auf, steigt über das Steigrohr in den oberen Bereich des Pufferspeichers, während gleichzeitig das darunter liegende kalte Wasser aus dem oberen Pufferspeicherraum über das Fallrohr in den unteren Pufferspeicherraum unterhalb der wärmeisolierenden Ronde des Schichtungsstabilisators gedrückt wird, wo sich das Wasser danach erwärmt. Infolge dieser Schwerkraftzirkulation wird die Wassertemperatur von oben nach unten sukzessive auf ein gleiches Niveau gebracht, wobei im höchsten Punkt des Pufferspeicherkessels sehr schnell warmes Brauchwasser zur Nutzung entnommen werden kann.

Wenn eine solche Heizanlage bzw. ein Heizsystem unter Einbeziehung einer Wärmepumpe betrieben wird, tritt das Problem auf, daß diese in nachteiliger Weise häufig ein- und ausgeschaltet werden muß und außerdem einen hohen Strombedarf erfordert.

Der Erfindung liegt daher die Aufgabe zugrunde, eine Heizanlage der eingangs genannten Art mit einer verbesserten Betriebsweise, insbesondere der Wärmepumpe, zu schaffen.

Diese Aufgabe wird erfindungsgemäß dadurch gelöst, daß die Wärmepumpe mit ihrer Rücklaufleitung an eine erste kalte Zone oberhalb des Schichtungsstabilisators im Bereich eines tiefliegenden Punktes des oberen Pufferspeicherraums und an eine zweite kalte Zone unterhalb des Schichtungsstabilisators angeschlossen ist und ihr im Rücklauf sowohl im Brauchwasservorrangbetrieb als auch im Heizungsbetrieb ohne Hilfsregelung stets aus der ersten oder zweiten kalten Zone Wasser zuströmt. Die somit erreichte, vorteilhafte Versorgung der Wärmepumpe mit im Rücklauf immer dem kältesten Wasser aus dem Pufferspeicher beruht auf der Erkenntnis, daß aufgrund der Schwerkraftzirkulation sich einerseits in dem oberen, größeren Pufferspeicherraum und andererseits in dem unteren, kleineren Pufferspeicherraum schwereres, kälteres Wasser jeweils im tiefsten Punkt, d. h. in der Nähe oberhalb des Schichtungsstabilisators bzw. darunter in Nähe des Bodens des kleineren Pufferspeicherraums befindet. Durch den Anschluß an diese beiden kalten Zonen läßt sich für die Wärmepumpe eine möglichst tiefe Rücklauftemperatur gewährleisten, und zwar unabhängig davon, in welchem Betriebsmodus die Heizanlage arbeitet. Beim Anschluß an die erste kalte Zone ergibt sich für die Wärmepumpe ein entsprechend größeres Puffervolumen, so daß sie möglichst lange Laufzeiten hat. Denn es vergeht doch eine längere Zeit, bis sich das warme Wasser von oben nach unten umgeschichtet hat, zumal dann, wenn erwärmtes bzw. aufgeheiztes Brauchwasser aus dem oberen Pufferspeicherraum entnommen wird.

Für die Wärmepumpe ergeben sich damit optimiert lange, kein unnötiges Ein- und Ausschalten erforderlich machenden Laufzeiten. Die für die Wärmepumpe erreichte, möglichst tiefe Rücklauftemperatur ermöglicht weiterhin einen geringeren Stromverbrauch, weil eine höhere Arbeitskennzahl erreicht wird. Unabhängig davon, welcher Betriebsmodus (Brauchwasser bzw. Puffervolumen oben oder beispielsweise Heizungswasser unten) vorliegt, wird durch die Nutzung der beiden Zonen der Wärmepumpe stets das kälteste Wasser zu- bzw. zurückgeführt.

Eine Ausgestaltung der Erfindung sieht vor, daß die zweite kalte Zone über Verbraucherleitungen einer Fußbodenheizung mit der Rücklaufleitung der Wärmepumpe verbunden ist. Alternativ könnte auch ein Feststoffbrennkessel oder dergleichen dazwischengeschaltet werden. Durch den Weg über einen Verbraucher-Versorgungskreislauf wird das der Wärmepumpe zurückgeführte Wasser auf natürliche Weise in seiner Temperatur verringert.

Es liegt im Rahmen von Ausgestaltungen der Erfindung, in dem unteren Pufferspeicherraum einen Solar-Wärmetauscher und in dem oberen Pufferspeicherraum nahe der Ronde mindestens einen Vorwärm-Wärmetauscher und im Abstand darüber Nachwärm-Wärmetauscher vorzusehen. Die Anzahl der Wärmetauscher wird von den betriebsbedingten Vorgaben der Heizanlage, insbesondere der Anzahl der Verbraucher, bestimmt.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: ein Heizsystem-Schema mit einem Pufferspeicher für Wärmepumpenbetrieb und mehreren daran angeschlossenen Verbrauchern; und
- Fig. 2: eine Schema-Darstellung wie zuvor, demgegenüber ergänzt durch eine Solarkollektoren-Energieversorgung.

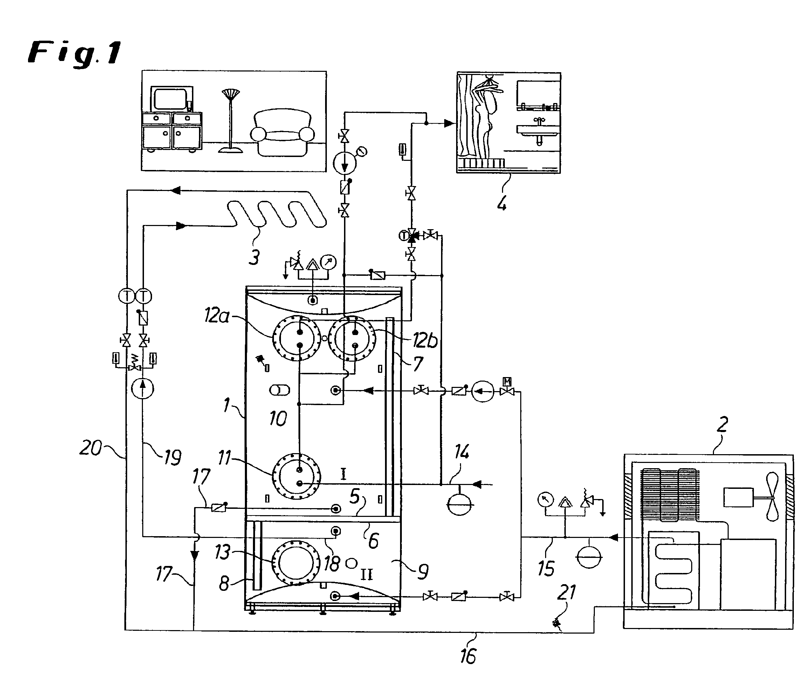

Ein in Fig. 1 dargestellter, als Schichtspeicher betriebener Pufferspeicher 1 einer Heizanlage ist an eine Wärmepumpe 2 angeschlossen und vereint über Anschlüsse mehrere Kreisläufe, wie zur Versorgung einer Fußbodenheizung 3 und eines Bades bzw. einer Dusche 4. Zur Optimierung der Nutzung der eingebrachten Energie und schnellen Bereitstellung warmen bzw. heißen Brauchwassers, insbesondere im höchsten Punkt des Pufferspeichers, zur Weiterleitung an die Verbraucher, ist in dem Pufferspeicher 1 ein Schichtungsstabilisator 5 eingesetzt. Dieser besteht insgesamt aus einem gut wärmeisolierenden Material, beispielsweise Polypropylen, und umfasst eine in ihrem Außendurchmesser dem Innendurchmesser des Kessels angepasste Ronde 6 sowie ein Steigrohr 7 und ein Fallrohr 8. Diese sind in einer Ebene einander gegenüberliegend nahe am Außenumfang der Ronde 6 angeordnet, so daß sich notwendige Einbauten, insbesondere Wärmetauscher, über den gesamten Pufferspeicher verteilt ungehindert anbringen lassen. Die Ronde 6 des Schichtungsstabilisators 5 befindet sich in ihrer Einbaulage im unteren Bereich des Pufferspeichers 1 und unterteilt diesen in einen kleineren, unteren Pufferspeicherraum 9 und einen demgegenüber sehr viel größeren, oberen Pufferspeicherraum 10.

In dem großen Pufferspeicherraum 10 sind Halsstutzen mit angedeuteten Vorlauf- und Rücklaufanschlüssen für Wärmetauscher zu erkennen, und zwar nahe oberhalb der Ronde 6 für einen Vorwärm-Wärmetauscher 11 sowie im Abstand darüber, im Bereich des Austrittsende des Steigrohres 7 für im Ausführungsbeispiel zwei Nachwärm-Wärmetauscher 12a, 12b. Der untere Pufferspeicherraum 9 ist mit einem Halsstutzen einschließlich Vor- und Rücklaufanschlüssen für einen Solar-Wärmetauscher 13 versehen.

Ausgehend von einer nicht dargestellten Versorgungsquelle mündet eine Kaltwasserleitung 14 in den Vorwärm-Wärmetauscher 11. Von der Wärmepumpe 2 führt eine sich verzweigende Vorlaufleitung 15 in den Pufferspeicher 1. Hingegen ist eine Rücklaufleitung 16 der Wärmepumpe 2 über Anschlussleitungen 17 bzw. 18 einerseits mit einer im Pufferspeicherraum 10 unmittelbar oberhalb der Ronde 6 ausgebildeten kalten Zone I und andererseits einer unterhalb der Ronde 6 im kleineren Pufferspeicherraum 9 in Bodennähe ausgebildeten, zweiten kalten Zone II verbunden.

Wie in den Figuren gezeigt, geht in den Ausführungsbeispielen die Anschlussleitung 18 der zweiten kalten Zone II in eine Vorlaufleitung 19 der Fußbodenheizung 3 über, deren Rücklaufleitung 20 an die Rücklaufleitung 16 zur Wärmepumpe 2 angeschlossen ist. Alternativ könnte der Wärmepumpe 2 das Wasser mit der niedrigen Temperatur aus der zweiten kalten Zone II auch direkt zuströmen. Bevor jedoch die zweite kalte Zone die Wärmepumpe 2 mit Wasser versorgt, wird das größere Volumen des oberen Pufferspeicherraums 10 ausgenutzt und zunächst die erste kalte Zone 1 runter gefahren. Hierzu strömt über die Anschlussleitung 17 und die Rücklaufleitung 16 aus der ersten kalten Zone 1 bis zur vollständigen Erwärmung des gesamten Brauchwassers im Pufferspeicherraum 10 kaltes Wasser in die Wärmepumpe 2. Wenn danach die Kaltwasserversorgung auf die kalte Zone II umgeschaltet wird, strömt der Rücklaufleitung 16 zur Wärmepumpe 2 nunmehr über den Weg der Vorlaufleitung 19 der Fußbodenheizung 3 sowie deren Rücklaufleitung 20 unverändert kaltes Wasser zu. Durch die wechselweise Möglichkeit der Versorgung der Rücklaufleitung 16 entweder aus der einen oder der anderen kalten Zone 1 bzw. 11 wird in jedem Fall für die Wärmepumpe 2 eine weitestmöglich niedrige Rücklauftemperatur gewährleistet, was durch einen Temperaturfühler 21 überwacht werden kann.

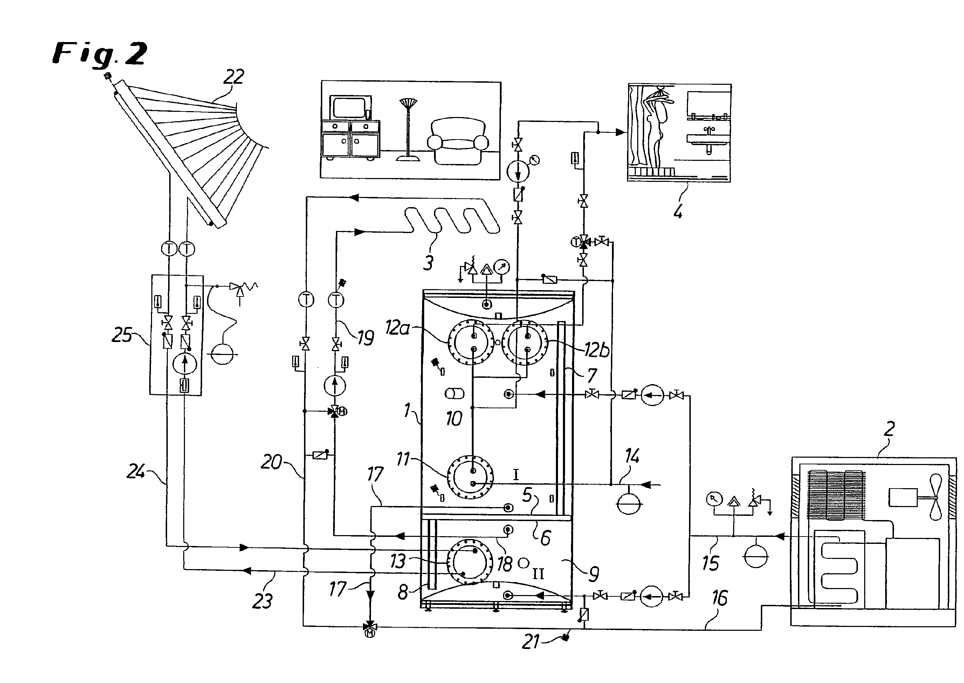

Die vorbeschriebene Rücklauf-Kaltwasserversorgung der Wärmepumpe 2 aus zwei kalten Zonen I bzw. II des Pufferspeichers 1 liegt auch bei der in Fig. 2 dargestellten Ausführung einer Heizanlage vor. Diese unterscheidet sich von der Anlage nach Fig. 1 lediglich dadurch, so daß gleiche Bauteile mit denselben Bezugsziffern versehen sind, daß an den Solar-Wärmetauscher 13 über eine Vorlaufleitung 23 und eine Rücklaufleitung 24 Solarkollektoren 22 mit einer eine Solarregelung einschließenden Solarstation 25 angeschlossen sind.

## Patentansprüche

1. Heizanlage mit einem Pufferspeicher (1) und Wärmepumpenbetrieb, der als Schichtspeicher ausgebildet ist und mehrere Kreisläufe vereint, wie einen Kreislauf für Wasch- und Duschwasser (4) und eine Versorgung einer Heizung (3), sowie Anschlüsse zur Aufnahme von an die Verbraucherleitungen angeschlossenen Wärmetauschern (11; 12 a, 12 b) aufweist, wobei im unteren Bereich des Pufferspeichers ein den Innenraum des Pufferspeichers unterteilender Schichtungsstabilisator (5) angeordnet und über diesen der untere Pufferspeicherraum mit dem oberen, größeren Pufferspeicherraum strömungstechnisch verbunden ist,
**dadurch gekennzeichnet,**
**daß** die Wärmepumpe (2) mit ihrer Rücklaufleitung (16) an eine erste kalte Zone (1) oberhalb des Schichtungsstabilisators (5) im Bereich eines tiefliegenden Punktes des oberen Pufferspeicherraums (10) und an eine zweite kalte Zone (II) unterhalb des Schichtungsstabilisators (5) angeschlossen ist, wobei der Wärmepumpe (2) und ihr im Rücklauf sowohl im Brauchwasservorrangbetrieb als auch im Heizungsbetrieb ohne Hilfsregelung stets aus der ersten oder zweiten kalten Zone (1; 11) Wasser zuströmt.

2. Heizanlage nach Anspruch 1,
**dadurch gekennzeichnet,**
**daß** die zweite kalte Zone (II) über Verbraucherleitungen (19, 20) einer Fußbodenheizung (3) mit der Rücklaufleitung (16) der Wärmepumpe (2) verbunden ist.

3. Heizanlage nach Anspruch 1 oder 2,
**gekennzeichnet durch**
einen in dem unteren Pufferspeicherraum (9) angeordneten Solar-Wärmetauscher (13).

4. Heizanlage nach einem der Ansprüche 1 bis 3,
**dadurch gekennzeichnet,**
**daß** im oberen Pufferspeicherraum (10) nahe des Schichtungsstabilisators (5) mindestens ein Vorwärm-Wärmetauscher (11) und im Abstand darüber Nachwärm-Wärmetauscher (12a, b) vorgesehen sind.
